# EUROPEAN PATENT APPLICATION

(11) **EP 4 044 086 A1**
(43) Date of publication of application: **17.08.2022**
(21) Application number: 20864394.0
(22) Date of filing: 26.08.2020
(51) Int. Cl.: G06Q 10/10, G06Q 10/06, G06Q 30/08

(54) **METHOD FOR MATCHING SERVICE PURCHASER AND SERVICE PROVIDER, AND EMPLOYMENT PLATFORM FOR IMPLEMENTING SAME**

(30) Priority: 17.09.2019 KR 20190114019
(71) Applicant: Worksbe, Inc., Seongnam-si, Gyeonggi-do 13595 (KR)
(72) Inventor: LEE, Joo Won, Seoul 06701 (KR); CHO, Seung Hoon, Seoul 08726 (KR); KIM, Hyun Ho, Seoul 06584 (KR)
(74) Representative: RGTH
(86) International application number: PCT/KR2020/011421
(87) International publication number: WO 2021/054635

(57) **Abstract**

The present invention relates to a platform for connecting an employer and a job seeker, and specifically to a novel method for matching a service purchaser and a service provider, in which a plurality of employers can share and put to work a single job seeker, and an employment platform for implementing same. To this end, the method for matching a service purchaser and a service provider according to the present invention is a method for matching the service purchaser and the service provider on the employment platform, the method including the steps of: receiving an input of service purchase conditions or the provision of already-secured service purchase conditions from each of a plurality of service purchase terminals, and storing the same; receiving an input of service providing conditions or the provision of already-secured service providing conditions from each of a plurality of service provider terminals, and storing the same; and generating a service route by matching service providers and service purchasers on the basis of the service purchase conditions and the service providing conditions so that at least one service provider is shared by at least two service purchasers.

## Description

### Technical Field

The present disclosure relates to a platform for connecting an employer and a job seeker, and more particularly, to a method for matching a service purchaser and a service provider in a new method whereby a plurality of employers share and put to work a single job seeker, and an employment platform for implementing the same.

### Background Art

Due to an increase in minimum wages, business owners may decrease the number of employees or may reduce business hours in order to minimize personnel reduction. If business hours are reduced, working hours of employees may also be reduced and thus there may be a problem that wages of employees are reduced.

The days when workers have only one job or work only for one employer are gradually fading, and the era of multi-job of working in various jobs if workers have conditions and capability to do so has come.

According to a typical employment method, one employer employs a job seeker who meets an employment condition. Currently established recruiting platforms provide matching information that meets an employment condition of an employer or a job condition of a job seeker to an employer or a job seeker, so that the employer employs a job seeker meeting the employment condition.

Employers and job seekers register their employment conditions and job conditions through a platform, and the platform posts this information, so that an employer and a job seeker find a person and a job complying with conditions that they demand, and make employment contracts individually.

As described above, the related-art recruiting platform matches employers and job seekers 1:1, and as a result, one employer employs a matched job seeker. Such an employment process depends on individual negotiation between both parties, an employer and a job seeker.

However, in the related-art employment method, there may be problems that an employer has difficulty in satisfying a wage condition of a job seeker solely, and a job seeker also has difficulty in working according to a wage condition that he/she demands, due to a burden of wage on an employer.

In addition, it may be difficult for an employer to find a person to work only for hours that the employer demands, and thus to induce many job seekers to apply for a job, and since a job seeker should read a lot of recruiting information one by one and find a suitable employer, and should repeat applying, interviewing, and negotiating, there may be a problem that the job seeker should go through a cumbersome procedure to have income that he/she demands by working for hours that he/she demands.

### Disclosure

### Technical Problems

The present disclosure has been developed in order to solve the above-mentioned problems, and an object of the present disclosure is to provide matching information of an employer and a job seeker, which satisfies a wage condition of the job seeker and simultaneously reduces a burden of wages on an employer and difficulty in employment.

### Technical Solution

To achieve the objects, a method for matching a service purchaser and a service provider in an employment platform according to the present disclosure includes the steps of: receiving an input of service purchasing conditions from a plurality of service purchaser terminals, respectively, or receiving already-secured service purchasing conditions, and storing the service purchasing conditions; receiving an input of service providing conditions from a plurality of service provider terminals, respectively, or receiving already-secured service providing conditions, and storing the service providing conditions; and generating a service route by matching based on the service purchasing conditions and the service providing conditions, so that one service provider is shared by at least two service purchasers.

In addition, an employment platform for matching a service purchaser and a service provider according to the present disclosure includes: a receiver configured to receive a service purchasing condition or a service providing condition from a service purchaser terminal or a service provider terminal, respectively; a database configured to store the service purchasing condition or the service providing condition received from the service purchaser terminal or the service provider terminal, and an already-secured service purchasing condition or service providing condition; a matching unit configured to match based on the service purchasing condition and the service providing condition, so that one service provider is shared by at least two service purchasers; and a service route generator configured to generate a service route according to the matched content.

In addition, according to the present disclosure, an application stored in a computer-readable recording medium which is executed in a terminal device of a service provider is characterized in that, wherein, when the service provider connects to an employment platform and registers a service providing condition, the application is configured to display, from the employment platform, a service route in which the service provider is matched to be shared by at least two service purchasers.

In addition, according to the present disclosure, an application stored in a computer-readable recording medium which is executed in a terminal device of a service purchaser is characterized in that, wherein, when the service purchaser connects to an employment platform and registers a service purchasing condition, the application is configured to display a service providing condition of a service provider from the employment platform, based on a service route in which two or more service purchasers including the service purchaser are matched to share one service provider.

In addition, a method for matching a service purchaser and a service provider in an employment platform according to the present disclosure includes the steps of: receiving an input of service purchasing conditions from a plurality of service purchaser terminals, respectively, or receiving already-secured service purchasing conditions, and storing the service purchasing conditions; receiving an input of service providing conditions from a plurality of service provider terminals, respectively, or receiving already-secured service providing conditions, and storing the service providing conditions; and matching at least two service providers, based on the service purchasing conditions and the service providing conditions, so that a service purchasing condition of one service purchaser is satisfied, wherein the service providing conditions includes working days and working times of the service provider, and a combination of the service providing conditions of the at least two service providers matches the service purchasing condition of the one service purchaser.

### Advantageous Effects

According to the present disclosure as described above, a plurality of employers share one job seeker, so that the employer can employ the job seeker to work only for hours that the employer demands, and thus can reduce a burden of a labor cost, and also, the job seeker can work in workplaces of various employers, and there is an effect that various workplaces satisfying a desired working condition can be ensured.

In addition, according to the present disclosure, a job seeker may receive an incentive differentially according to evaluation by an employer, so that the possibility that a worker works assiduously increases, and accordingly, the possibility that an excellent staff is employed and employment is maintained increases, so that an employer can stably do business, and a faithful job seeker may have favorable treatment regarding his/her carrier, working attitude, and skills in a job seeking process.

In addition, a service providing history of a job seeker and evaluation of the corresponding job seeker by an employer are stored in a database, so that an employer can employ a reliable job seeker by the system, and in addition, a job seeker gains trust on his/her carrier based on the system, and thus may receive improved working conditions from an employer. Therefore, there is an effect of making a good circulation employment environment between an employer and a job seeker.

### Brief Description of Drawings

FIG. 1 is a schematic view of a system for matching a service purchaser and a service provider according to the present disclosure;
FIG. 2 is a view illustrating an internal configuration of an employment platform according to the present disclosure;
FIG. 3 is a view illustrating a concept of an N:1 employment method according to the present disclosure;
FIG. 4 is a signal flowchart illustrating a process of matching a service purchaser and a service provider according to the present disclosure;
FIG. 5 is a sequence diagram of a process in an employment platform for matching a service purchaser and a service provider according to the present disclosure;
FIG. 6 is a view illustrating a service route according to the present disclosure; and
FIG. 7 is a view illustrating an N:M employment form according to the present disclosure.

### Best Mode

Hereinafter, embodiments according to the present disclosure will be described in detail with reference to the accompanying drawings. A configuration of the present disclosure and an effect resulting therefrom will be clearly understood based on the following detailed descriptions.

In the detailed description of the present disclosure, the same reference numerals are used for the same elements even if they are represented on different drawings, and detailed descriptions of well-known configurations will be omitted since they would unnecessarily obscure the subject matters of the present disclosure.

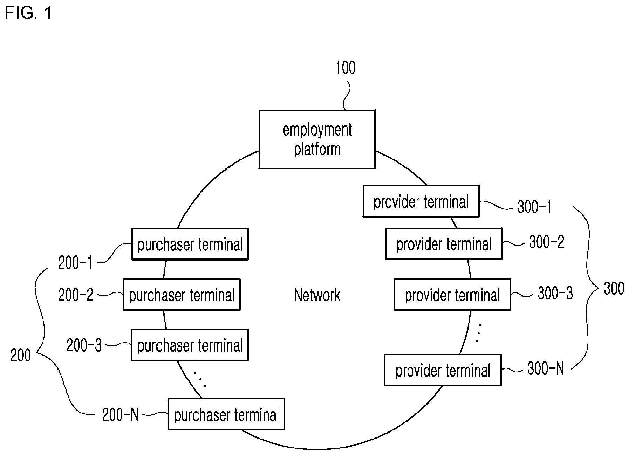

FIG. 1 illustrates a schematic configuration of a system for matching a service purchaser and a service provider according to the present disclosure.

Referring to FIG. 1, the system for matching the service purchaser and the service provider may be configured by an employment platform 100, a plurality of purchaser terminals 200, a plurality of provider terminals 300.

The purchaser terminal 200 refers to a terminal device that a person who wants to purchase a service owns. In an embodiment of the present disclosure, the person who wants to purchase the service refers to an employer who wants hire staffs (a part-timer, a freelancer, or a part time worker).

Once the service purchaser connects to the employment platform 100 through his/her own purchaser terminal 200 and registers a service purchasing condition that the service purchaser demands, the service purchaser may acquire service provider information matching the service purchasing condition through the employment platform 100.

The provider terminal 300 refers to a terminal device that a person who wants to provide a service owns. In an embodiment of the present disclosure, the person who wants to provide the service refers to a job seeker (a worker who wants to do a part time job).

Once the service provider connects to the employment platform 100 through his/her own provider terminal 300 and registers a service providing condition that the service provider demands, the service provider may acquire service purchaser information matching the service providing condition through the employment platform 100. According to an embodiment of the present disclosure, the service provider may be provided with a service route as service purchaser information.

The purchaser terminal 200 and the provider terminal 300 may be personal computers, smartphones, tablet PCs, or the like. However, this should not be considered as limiting. Any type of device that can connect to the employment platform 100 and can install and run an application (software) for a matching service between a purchaser and a provider, or that can connect to a web site through a browser may be used.

The employment platform 100 may receive an input of a service purchasing condition from the purchaser terminal 200 and may receive an input of a service providing condition from the provider terminal 300, and may store the same, and may perform a matching operation (N:1 matching operation), based on the service purchasing condition and the service providing condition, so that one service provider is shared by at least two service purchasers, or may perform an operation of matching at least two service providers so as to satisfy the service purchasing condition of one service purchaser (1:N matching operation).

In addition, when a change in the service purchasing condition or the service providing condition is caused (a vacancy in employer's place, loss of a job in job seeker's place), the employment platform 100 may additionally perform a matching operation regarding working days and working times available due to the vacancy or loss of the job.

The employment platform 100 according to the present disclosure may receive an input of service purchasing conditions and service providing conditions from the plurality of purchaser terminals 200 and the plurality of provider terminals 300, and may store the same, but may receive service purchasing conditions of employers or service providing conditions of job seekers or part-timers, which are already secured by an existing recruiting site, a part-time job-related site, a group of employers, a part-time job community (network), a head office of affiliated stores, an entered businessperson, or the like.

By performing the matching operation, the employment platform 100 generates a service route that displays a plurality of service purchasers who will share one service provider on an electronic map by places and time, and may provide the same to the provider terminal 300.

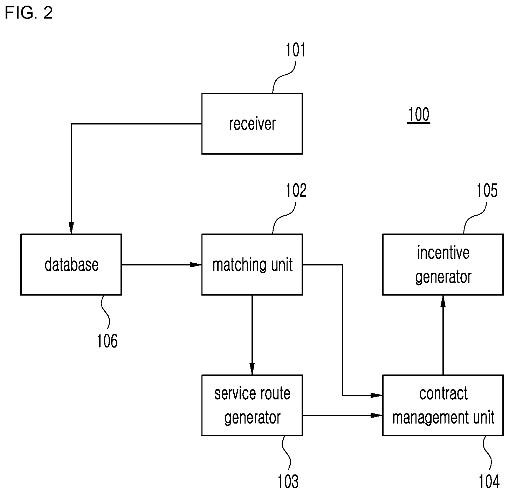

FIG. 2 illustrates an internal configuration of the employment platform according to the present disclosure.

Referring to FIG. 2, the employment platform 100 includes a receiver 101, a matching unit 102, a service route generator 103, a contract management unit 104, an incentive generator 105, and a database 106.

The receiver 101 receives an input of respective service purchasing conditions from the plurality of service purchaser terminals 200, and receives an input of respective service providing conditions from the plurality of service provider terminals 300, and may store the same in the database 106.

The matching unit 102 performs a matching operation, based on the service purchasing conditions and the service providing conditions, so that one service provider is shared by at least two service purchasers.

The present disclosure discloses the feature that a matching operation is performed, so that one job seeker is shared by a plurality of employers, but a matching operation may be performed, so that that a plurality of job seekers are employed by one employer. In this case, an operation of matching a plurality of workers who want to work at different times may be performed. Through 1:N employment, full employment may be stably maintained without a vacancy during a time of employment demanded by the employer.

The service route generator 103 generates a service route according to a result of the matching operation. The service route displays a place and a time at which a service provider will provide a service on the map in a movement order and a time order. The service route generator 103 generates a plurality of service route candidates.

In an embodiment of the present disclosure, the service route displays service providing places and times on an electronic map in a movement order and a time order, but this should not be considered as limiting. The service route may be displayed on a simple table or may be implemented in various forms.

The contract management unit 104 provides the plurality of service route candidates generated at the service route generator 103 to the service provider terminal 300, and, upon receiving a selected service route from the service provider terminal 300, may transmit a service providing condition to the service purchaser 200 included in the service route and may conclude a service contract between the service purchaser and the service provider.

When all of the service purchasers included in the service route accept the service provider and an acceptance signal is received from all of the service purchaser terminals 200, the contract management unit 104 may electronically conclude the service contract between the service purchaser and the service provider, that is, an employment contract.

Even if the acceptance signal is not received from all of the service purchaser terminals 200, when an acceptance signal is received from at least one service purchaser terminal 200 and a contract acceptance signal is received from the service provider terminal 300, the contract management unit 104 may conclude the service contract between the service purchaser and the service provider.

The contract management unit 140 may monitor all service progressing states from the conclusion of the service contract to the termination of the contract. That is, when a service contract period is expired, the contract management unit 104 may receive evaluation information on the service provider from the service purchaser and may perform a wage payment procedure. In addition, the contract management unit 104 may record and manage various service histories related to evaluation information, wage payment, and incentive offering.

The incentive generator 105 issues an incentive to the service provider, based on evaluation information on the service provider which is received from the contract management unit 104.

The incentive is offered in addition to a wage for provision of a service, and may be offered differentially according to evaluation information and a wage condition of the service provider. That is, a service provider earning a high wage may have a higher basic incentive than a service provider earning a low wage, and also, an incentive increases as evaluation information (grades A, B, C) is higher.

The incentive may be offered in the form of electronic money, a coupon, an exchange ticket, an advance payment means, and is better if it can be used in a store, a shop or a business site of the service purchaser.

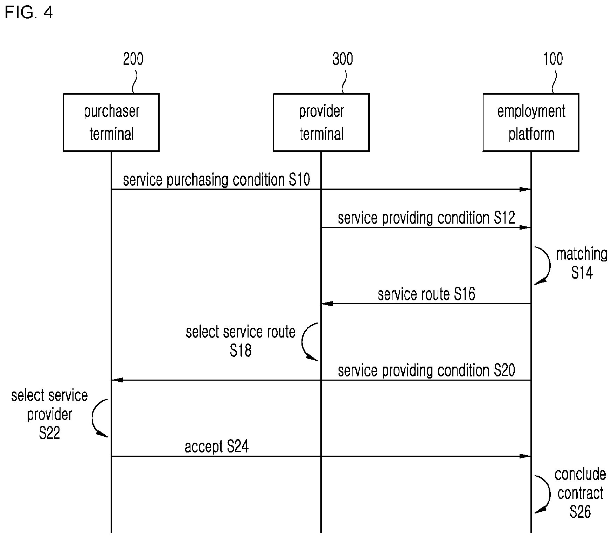

FIG. 4 illustrates a signal flow process illustrating a process of matching a service purchaser and a service provider according to the present disclosure.

Referring to FIG. 4, the service purchaser terminal 200 connects to the employment platform 100 and registers a purchasing condition, which is an employment condition that the service purchaser demands (S10).

The service provider terminal 300 connects to the employment platform 100 and registers a service providing condition, which is a working condition that the service provider demands (S12). In an embodiment of the present disclosure, the employment platform 100 receives the input of the service providing condition from the service provider terminal 300 and registers the same, but may register service providing conditions that are already secured from a service purchaser group or a network.

On the signal flow of FIG. 4, the service providing condition is registered after the service purchasing condition is registered. However, this sequence is not fixed and the processes of registering the service purchasing condition and the service providing condition may be performed simultaneously at unspecified time regardless of the sequence.

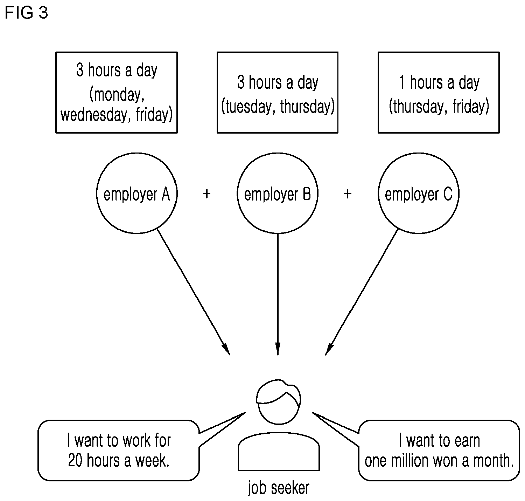

An employment condition of an employer who is a service purchaser, and a working condition of a job seeker who is a service provider will be described with reference to FIG. 3.

Referring to FIG. 3, a condition where an employer A wants to hire a part-timer who can work only for 3 hours a day on Monday, Wednesday, Friday, a condition where an employer B wants a hire a part-timer who can work only for 3 hours a day on Tuesday, Thursday, and a condition where an employer C wants a part-timer only for 1 hour a day on Thursday, Friday may be service purchasing conditions of service purchasers, respectively.

When a job seeker wants to earn one million won a month by working 20 hours a week, this demand of the job seeker is a service providing condition. In addition, the job seeker may determine specific working days and times, and for example, may propose working from 9 to 12 a.m. on Tuesday, from 13 to 18 p.m. on Thursday, and full time from 9 to 18 on Saturday, as a working condition.

When the employers A, B, C employ the job seeker all together according to the service purchasing condition and the service providing condition as described above, the employers A, B, C may satisfy their respective employment conditions and the job seeker may also satisfy his/her working condition.

As described above, the present disclosure relates to a method for a plurality of employers to share one job seeker. If a related-art method is a 1:1 employment method whereby one employer employs one job seeker, the employment method of the present disclosure is an N:1 employment method.

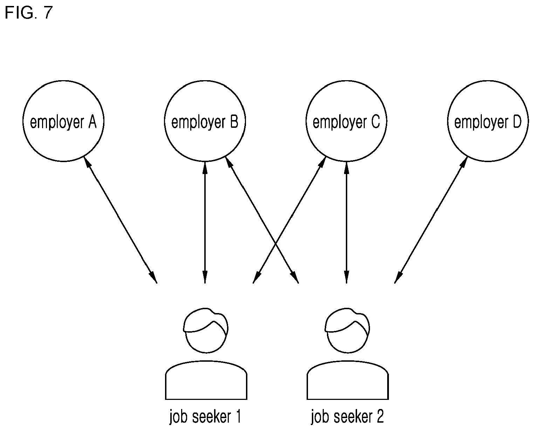

The employment form between the plurality of employers and the seeker based on the N:1 employment method may be extended as shown in FIG. 7.

Referring to FIG. 7, an employer A, an employer B, and an employer C employ a job seeker 1 all together, and the employer B, the employer C, and an employer D may employ a job seeker 2 altogether.

In this case, the employer B, the employer C employ both the job seeker 1 and the job seeker 2, and as a result, may have an N:M employment form based on the N:1 employment method according to the present disclosure.

In addition, each of the employer B, the employer C employs both the job seeker 1 and the job seeker 2, which is a 1:N employment form. Herein, 1:N is not a related-art method whereby one employer simply employs two job seekers, but a method of matching at least two service providers so as to satisfy a service purchasing condition of one service purchaser.

Accordingly, combination of the service providing conditions of the two or more service providers matches the service purchasing condition of one service purchaser.

The employment platform 100 may receive the input of the service purchasing conditions and the service providing conditions from the plurality of purchaser terminals 200 and the plurality of provider terminals 300, respectively, and store the same, and may perform a matching operation to mutually connect a service purchaser and a service provider (S14).

The matching operation according to the present disclosure is not a related-art method of simply connecting a plurality of job seekers to one employer or simply connecting a plurality of employers to one job seeker, but a matching method whereby one job seeker is shared by a plurality of employers and is employed.

The matching operation according to the present disclosure may be implemented in various ways.

For example, an N:1, 1:N, or N:M employment form may be implemented through a process in which service purchasing conditions of a plurality of employers are analyzed based on a service providing condition of one job seeker, and are matched, a process in which service providing conditions of a plurality of job seekers are analyzed based on a service purchasing condition of one employer and are matched, or a process in which service providing conditions of a plurality of job seekers are analyzed based on a service purchasing condition of one employer, and the plurality of job seekers are arranged for one employer, and a service purchasing condition of another employer is matched with each of the arranged job seekers.

Through the matching operation, the employment platform 100 generates a service route which displays a place and a time at which the service provider will work on a map or a table in a movement order and a time order. A plurality of service routes may be generated and a plurality of service route candidates may be transmitted to the service provider terminal 300 (S16).

When receiving the plurality of service route candidates from the employment platform 100, the service providing terminal 300 selects at least one of the plurality of service route candidates (S18).

When the service provider terminal 300 selects the service route, the employment platform 100 transmits the service providing condition to all of the service purchaser terminals 200 included in the selected service route (S20).

When the service purchaser terminal 200 receives the service providing condition of the job seeker from the employment platform 100 and then the service providing condition matches the employment condition of the service purchaser terminal 200, the service purchaser terminal 200 transmits a service acceptance to the employment platform 100 (S24). However, when the service providing condition does not match the employment condition, the service purchaser terminal 200 may not accept the service and reject the service.

When all of the service purchaser terminals 200 included in the service route transmit a service acceptance intention, the employment platform 100 concludes a service contract between the service purchaser and the service provider (S26). However, even if all of the service purchaser terminals 200 do not transmit the service acceptance intention, when the service provider terminal 300 wants to conclude the service contract only with some service purchasers who send the service acceptance intention, the employment platform 100 may conclude the service contract between the service purchaser and the service provider.

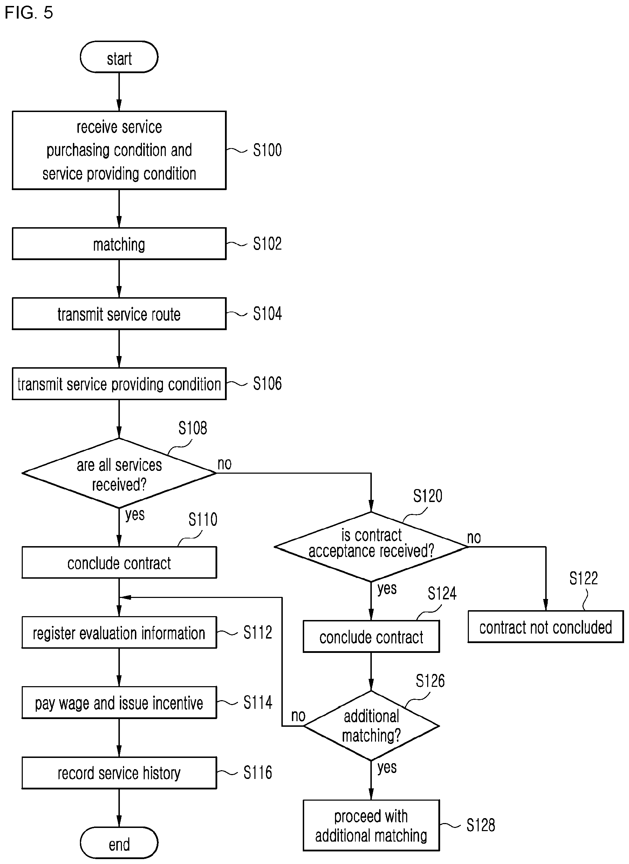

FIG. 5 illustrates a processing sequence in the employment platform for matching a service purchaser and a service provider according to the present disclosure.

Referring to FIG. 5, the employment platform 100 receives a service purchasing condition and a service providing condition (S100), and performs a matching operation based on the service purchasing condition and the service providing condition (S102).

The employment platform 100 generates a plurality of service route candidates by the matching operation, and transmits the same to the service provider (S104).

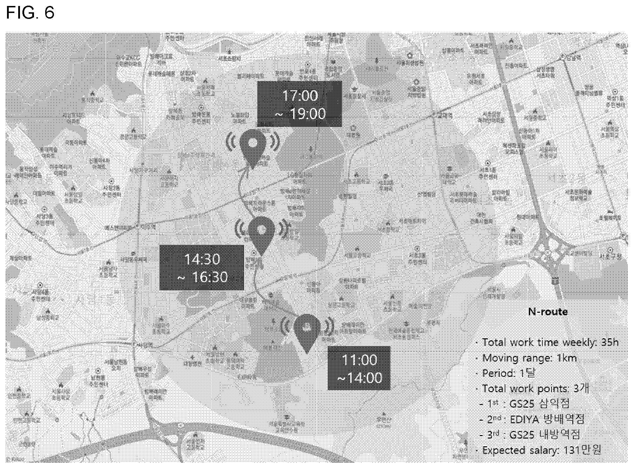

The service route will be described with reference to FIG. 6.

Referring to FIG. 6, the service route may be displayed on an electronic map. On the electronic map, a place and a time at which the service provider will provide a service are displayed according to a movement order and a time order.

On the electronic map, three workplaces are displayed. This case is a case where the worker works from 11:00 to 14:00 in a first place, works from 14:30 to 16:30 in a second place considering a travel time, and then, works from 17:00 to 19:00 in a third place.

On the service route, the working places and the working times are displayed according to a movement order and a time order, and working-related information such as a working period, a travel distance, working hours a day/a week, an expected wage, etc. may be displayed.

A plurality of service routes may overlap on the map or may be displayed on separate maps and may be provided as a plurality of service route candidates.

In FIG. 6, places and times are displayed on the map of the service route simultaneously according to the movement order and the time order, but in the case of homeworking, a place may be specified and thus only time may be displayed according to a working order.

The plurality of service route candidates are provided to the service provider, and, when the service provider selects at least one service from the plurality of service route candidates, the employment platform 100 transmits the service providing condition to all service purchasers included in the selected service route (S106).

It is identified whether a service acceptance is received from all of the service purchasers who receives the service providing condition (S108), and, when a service acceptance intention is received from all of the service purchasers, a service contract is concluded (S110).

When the service acceptance is not received from all of the service purchasers, but there is a service acceptance intention from at least one service purchaser, it is identified whether a service contract acceptance is received from the service provider (S120), and, when a service contract acceptance intention is received, a service contract on some conditions may be concluded (S124), and, when the service contract acceptance intention is not received, the service contract may be processed as not being concluded (S122).

That is, even if the service acceptance intention is not received from all of the service purchasers, the service contract may be concluded through a process of identifying whether there is a service providing intention of the service provider.

It is identified whether there is a request for additional matching after the service contract on some conditions is concluded (S126), and, when there is a request for additional matching, an additional matching operation is performed (S128), and, when there is no request for additional matching, an evaluation information registering step (S112) is performed.

The additional matching refers to a process of finding a service purchaser who supplements unsatisfied conditions in the middle of the service contract since some of the service providing conditions is not satisfied when the service contract is concluded without receiving the service acceptance from all of the service purchasers.

After the service contract is concluded and the service provider provides a service in a store, a shop, or a business site of the service purchaser for a predetermined period according to the service contract, the service purchaser may register evaluation information on the service provider at the employment platform 100 (S112).

The employment platform 100 identifies the evaluation information and pays a wage to the service provider and offers an incentive in addition to the wage (S114).

The evaluation information inputted by the service purchaser may be inputted as a grade or a score, and the evaluation information may be a criterion for offering an incentive differentially, and may be used as a reference material when a service purchaser employs the corresponding service provider. The evaluation information on the service provider may include sincerity such as attendance, working skills, job fitness, career verification, a service period, a business attitude.

Although it is illustrated in the embodiment of the disclosure that the service purchaser registers the evaluation of the service provider, the service provider may also register evaluation of the service purchaser. In this case, the evaluation information of the service purchaser may include an additional working condition, a working environment, sincerity in payment of wages, an employer's attitude, a service period, etc.

As described above, the evaluation information on the service provider may be used as a reference material for offering an incentive or employing, and also, may be used as a criterion for ranking a plurality of matched service providers. In addition, the evaluation information on the service purchaser may be used as a criterion for ranking service purchasers, and may serve as a criterion for determining a priority of the service route.

In a wage payment procedure, the employment platform 100 may receive each wage of total wages from each of the employers sharing the job seeker, and may provide the wage to the job seeker. To achieve this, the employer may transfer a wage to an account opened at the employment platform 100, and the job seeker registers his/her account at the employment platform 100 and may receive the wage at his/her account through the employment platform 100.

The evaluation information on the service provider, the wage payment, the incentive offering, etc. inputted after the service contract is terminated are recorded on a service history database of the employment platform 100 (S116). The service purchaser may read information on service providers recorded on the service history database according to a membership level or an employment history.

The above description is merely an illustrative description of the present disclosure, and various changes may be made by those skilled in the art without departing from the technical concept of the present disclosure.

Therefore, embodiments disclosed in the detailed description of the present disclosure are not intended to limit the present disclosure. The scope of the present disclosure should be interpreted by the appended claims, and all technologies within the scope equivalent thereto should be interpreted as being included in the scope of the present disclosure.

### Industrial Applicability

The present disclosure may be additionally applied to existing part-time job, recruiting sites or platforms or applications, or may be implemented as a new platform or a new application and may be widely utilized in the field of part time jobs or recruiting.

## Claims

1. A method for matching a service purchaser and a service provider in an employment platform, the method comprising the steps of:
receiving an input of service purchasing conditions from a plurality of service purchaser terminals, respectively, or receiving already-secured service purchasing conditions, and storing the service purchasing conditions;
receiving an input of service providing conditions from a plurality of service provider terminals, respectively, or receiving already-secured service providing conditions, and storing the service providing conditions; and
generating a service route by matching based on the service purchasing conditions and the service providing conditions, so that one service provider is shared by at least two service purchasers.

2. The method of claim 1, wherein the step of generating the service route further comprises the steps of:
generating a plurality of service route candidates and transmitting the plurality of service route candidates to the service provider terminal, and, when the service provider terminal selects at least one of the plurality of service route candidates, transmitting the service providing conditions to a service purchaser terminal included in the selected service route; and
when a contract acceptance is received from the service provider terminal after a service acceptance is received from all of the service purchaser terminals included in the service route or a service acceptance is received from at least one service purchaser terminal, concluding a service contract between the service purchaser and the service provider.

3. The method of claim 2, further comprising a step of, when the service acceptance is not received from all of the service purchaser terminals included in the service route and the service contract is concluded between the service purchaser and the service provider, matching a service purchaser who satisfies an unsatisfied condition among the service providing conditions.

4. The method of claim 2, further comprising a step of, when evaluation information on the service provider is registered from the service purchaser terminal after the concluded service contract is terminated, offering an incentive to the service provider terminal based on the evaluation information.

5. The method of claim 1, wherein the service route displays at least one of a place and a time at which the service provider will provide a service according to a movement order or a time order.

6. An employment platform for matching a service purchaser and a service provider, the employment platform comprising:
a receiver configured to receive a service purchasing condition or a service providing condition from a service purchaser terminal or a service provider terminal, respectively;
a database configured to store the service purchasing condition or the service providing condition received from the service purchaser terminal or the service provider terminal, and an already-secured service purchasing condition or service providing condition;
a matching unit configured to match based on the service purchasing condition and the service providing condition, so that one service provider is shared by at least two service purchasers; and
a service route generator configured to generate a service route according to the matched content.

7. The employment platform of claim 6, wherein the service route generator is configured to generate a plurality of service route candidates, and,
wherein the employment platform further comprises a contract management unit which is configured to, when the service provider terminal selects at least one of the plurality of service route candidates, transmit the service providing condition to a service purchaser terminal included in the selected service route, and, if all of the service purchaser terminals included in the service route accept a service or all of the service purchaser terminals do not accept the service, when the service provider terminal accepts a contract, to conclude the service contract between the service purchaser and the service provider.

8. The employment platform of claim 7, wherein, when the service acceptance is not received from all of the service purchaser terminals included in the service route and the service contract is concluded between the service purchaser and the service provider, the matching unit is configured to additionally match a service purchaser who satisfies an unsatisfied condition among the service providing conditions.

9. The employment platform of claim 7, further comprising an incentive generator configured to, when evaluation information on the service provider is registered from the service purchaser terminal after the concluded service contract is terminated, offer an incentive to the service provider terminal based on the evaluation information.

10. The employment platform of claim 6, wherein the service route generator is configured to generate the service route which displays at least one of a place and a time at which the service provider will provide a service according to a movement order or a time order.

11. An application stored in a computer-readable recording medium which is executed in a terminal device of a service provider, wherein, when the service provider connects to an employment platform and registers a service providing condition, the application is configured to display, from the employment platform, a service route in which the service provider is matched to be shared by at least two service purchasers.

12. The application of claim 11, wherein the service route displays at least one of a place and a time at which the service provider will provide a service according to a movement order or a time order.

13. The application of claim 11, wherein the service route is configured by a plurality of service route candidates and a service provider selects at least one of the plurality of service route candidates.

14. An application stored in a computer-readable recording medium which is executed in a terminal device of a service purchaser, wherein, when the service purchaser connects to an employment platform and registers a service purchasing condition, the application is configured to display a service providing condition of a service provider from the employment platform, based on a service route in which two or more service purchasers including the service purchaser are matched to share one service provider.

15. A method for matching a service purchaser and a service provider in an employment platform, the method comprising the steps of:
receiving an input of service purchasing conditions from a plurality of service purchaser terminals, respectively, or receiving already-secured service purchasing conditions, and storing the service purchasing conditions;
receiving an input of service providing conditions from a plurality of service provider terminals, respectively, or receiving already-secured service providing conditions, and storing the service providing conditions; and
matching at least two service providers, based on the service purchasing conditions and the service providing conditions, so that a service purchasing condition of one service purchaser is satisfied,
wherein the service providing conditions comprise working days and working times of the service provider, and a combination of the service providing conditions of the at least two service providers matches the service purchasing condition of the one service purchaser.

16. The method of claim 15, further comprising a step of, when a vacancy which changes the service purchasing condition is received from the terminal of the service purchaser, matching a service provider who has a service providing condition corresponding to working days and times in which the vacancy occurs.
